# EUROPEAN PATENT APPLICATION

(11) **EP 2 738 580 A1**
(43) Date of publication of application: **04.06.2014**
(21) Application number: 12818262.3
(22) Date of filing: 11.07.2012
(51) Int. Cl.: G02B 5/08, B32B 9/00, B32B 27/00, G02B 1/10

(54) **MIRROR FOR SOLAR LIGHT REFLECTION, REFLECTION DEVICE FOR SOLAR-HEAT POWER GENERATION, FUNCTIONAL FILM, AND ELECTROSTATIC CHARGE PREVENTING COMPOSITION FOR OUTDOOR USE**

(30) Priority: 25.07.2011 JP 2011161499
(71) Applicant: Konica Minolta, Inc., Tokyo 100-7015 (JP)
(72) Inventor: KUMAGAI, Takenori, Chiyoda-ku Tokyo 100-7015 (JP)
(74) Representative: Gille Hrabal
(86) International application number: PCT/JP2012/067647
(87) International publication number: WO 2013/015112

(57) **Abstract**

Provided is a solar reflective mirror (20) having a silver reflective layer (3) provided on a resin base (1), in which the solar reflective mirror (20) includes a hard coat layer (8) provided on a topmost surface on a light-incident side of the mirror, and an antistatic layer (7) is provided between the silver reflective layer (3) and the hard coat layer (8), preferably so as to be adjacent to the hard coat layer (8).

## Description

### TECHNICAL FIELD

The present invention relates to a mirror for solar light reflection (solar reflective mirror), a reflection device for solar heat power generation, a functional film, and an electrostatic charge preventing composition (antistatic composition) for outdoor use.

### BACKGROUND ART

In recent years, various natural energies have been investigated as substitute energies for fossil fuel energies obtainable from petroleum, natural gas and so forth. Among them, solar energy has attracted attention as substitute energy for fossil fuel by virtue of its best stability and abundance of energy.

There are numerous ongoing research and development activities on solar cell which makes use of solar energy with increasing use efficiency of sunlight. The recovery efficiency and energy conversion efficiency, however, still remain at unsatisfactory levels at present.

Another system of converting sunlight into electric energy having attracted attention is solar heat power generation which generates electricity mediated by heat obtained by condensing sunlight using a reflective mirror. This method is hopeful for effective utilization of sunlight since the power generation is feasible night and day and the method is supposed to be better in the generation efficiency than solar battery from a long-term perspective.

The reflective mirror for solar heat power generation currently used is a glass-based mirror. The glass mirror is, however, disadvantageous for its large weight, large volume, high cost of transportation, difficulty in installation and liability to crack. Use of a mirror composed of a resin, substitutive for glass, is now supposed to reduce the weight and to avoid cracking. The film mirror made in a film form therefore attracts attention. The film mirror is a good reflective mirror featured by its light weight, flexibility and adoptability to size expansion and mass production while suppressing the manufacturing cost.

The solar heat power generation facility is often constructed in desert region, so that the film mirror is required to keep good performances even under severe conditions such as in desert. Another problem is that the mirror may catch dusts on the surface thereof, and degrades the reflectance. At a solar heat power generation plant in California, it was observed that the reflectance of the mirror degraded by 20% or more within one month. It is reported that a 1% decrease in the reflectance of mirror results in a loss of $185,000/year. While the mirror at present is cleaned by jetting deionized water at a frequency of once every two weeks to every two months or around. Assuming the washing costs $0.01/m² or around each time, washing of all mirrors all over the plant will cost as much as $1,000 to $20,000. In addition, the mirror is also required to have a certain level of surface hardness since it is cleaned by rubbing with a brush several times a year (see Non-Patent Literature 1). In short, a current issue of the film mirror is that there is a need of forming an antifouling hard coat layer given with antifouling property, abrasive (scratch) resistance and weather resistance, in order to provide three these functions to the topmost surface of the film mirror.

We have found from our investigations that high levels of waterproofing performance and washability can be obtained by forming a water-repelling hard coat layer on the surface of the film mirror. In particular, a high level of antifouling property was obtained by forming the water-repelling hard coat layer which shows a small sliding angle on the surface thereof. The film mirror whose surface is made of resin, however, more readily take a charge and more readily catch dust as compared with the glass mirror. Problems are now understood as dust adhesion and lowered reflectance as a consequence. If the electrostatic charge on the surface of the film mirror is suppressed anyhow, then the dust adhesion will be suppressed and the reflectance will be kept at a high level over a long term.

A general method of suppressing electrostatic charge on the surface of the film mirror is to form a layer which contains an electrically conductive material so as to provide electro-conductivity to the surface. The electrically conductive material is exemplified by electrically conductive molecule such as ionic antistatic agent, electrically conductive polymer, and electrically conductive particle. Among them, the electrically conductive particle is supposed to be most promising in view of keeping electro-conductivity over a long term in an environment with a constant UV irradiation such as in desert.

As an exemplary technique of giving antistatic property to the film, Patent Literature 1 proposes an antistatic hard coat film configured to have a layer which contains an electrically conductive particle. However, the film whose surface is not water repellent shows only an insufficient antifouling property from the viewpoints of removal of water-derived foul and washability of the mirror. Patent Literature 2 and Patent Literature 3 propose structures according to which a translucent electrically conductive layer is formed on a translucent base film and a hard coat layer is formed further thereon. However, no description is given on the sliding angle and weather resistance, so that the designs are supposed to fail in achieving target performances. In particular, the films proposed by Patent Literatures 1 to 3 are made of materials mainly used for electronic equipment typically for the purpose of protecting the surface of display device and are supposed to be not suitable for outdoor applications under exposure to sunlight.

### CITATION LIST

### PATENT LITERATURE

Patent Literature 1: JP 2004-90420A
Patent Literature 2: JP H11-42729A
Patent Literature 3: JP H11-115087

### Non-Patent Literature

Non-Patent Literature 1: Final report on the operation and maintenance improvement program for concentrating solar power plants. Printed June 1999, Gilbert E. Cohen, David W. Kearney, Gregory J. Kolb

### SUMMARY OF THE INVENTION

### TECHNICAL PROBLEM

As described above, while the film mirror is featured by its light weight, flexibility, and adoptability to size expansion and mass production while suppressing the manufacturing cost, the film mirror is suffering from dust adhesion onto the surface thereof and lowered regular reflectance as a consequence when installed over a long term in an environment such as desert where dust pollution is heavy and rainfall is scarce. In this case, the regular reflectance might be partially recovered by brushing the adhered dirt off but the washing may give scratch on the mirror surface and may degrade the regular reflectance even below the initial level.

It is therefore an object of the present invention to provide a solar reflective mirror which is excellent in scratch resistance and antifouling performance, and is capable of keeping a good regular reflectance for a long term even if installed for a long term in a severe environment and of ensuring a good resistance against sunlight; a reflection device for solar heat power generation using the same; a functional film; and an antistatic composition for outdoor use.

### MEANS TO SOLVE THE PROBLEM

The solar reflective mirror has succeeded in achieving a good reflective performance over a long term, when given with water repellency, weather resistance (in particular a preventive performance against UV degradation) and scratch resistance. A problem of dirt adhesion, however, still remains unsolved.

We then conducted thorough investigations and found out that the electrostatic adhesion of dust or the like was avoidable by reducing electric resistance of the topmost surface of the film mirror. Aiming at imparting the film mirror not only with water repellency, weather resistance and scratch resistance but also with antistatic performance, we finally reached the goal of the present invention by forming an antistatic layer which contains an electrically conductive particle as a layer adjoining the topmost hard coat layer or below the topmost hard coat layer while placing an extra-thin layer between the antistatic layer and the hard coat layer.

According to Claim 1, there is provided a solar reflective mirror having a reflective layer provided on a resin base. The mirror has a hard coat layer provided on the topmost surface on a light-incident side of the mirror and an antistatic layer provided between the reflective layer and the hard coat layer.

According to this structure, in addition to antifouling performance ascribable to water repellency of the hard coat layer, weather resistance against UV and scratch resistance against any surface-damaging factor such as sand storm expectable from the hard coat layer, the antifouling performance and weather resistance may further be improved by the contribution of the antistatic layer. This is because the antistatic layer can prevent dust or the like from adhering. The solar reflective mirror has the reflective layer intrinsically for the purpose and silver, for example, which is mainly used as a material for composing the reflective layer, is labile to degradation due to external factors such as sulfide (or dust in desert) when used outdoors. Since provision of the antistatic layer now makes the mirror less likely to catch dust and thereby prevents sulfides from approaching silver, so that the reflective layer may be prevented from degrading and thereby the regular reflectance will not be reduced.

According to Claim 2, there is provided the solar reflective mirror of Claim 1, in which the antistatic layer is provided adjoining the hard coat layer.

According to Claim 3, there is provided the solar reflective mirror of Claim 1 or 2, in which the antistatic layer has a thickness of 100 nm or larger and 1 µm or smaller.

Since the thickness of the antistatic layer is 100 nm or larger, the electrically conductive filler will not protrude out from the antistatic layer to degrade the surface smoothness. Since the thickness is 1 µm or smaller, the light translucency will not be degraded either.

According to Claim 4, there is provided the solar reflective mirror described in any one of Claims 1 to 3, in which the antistatic layer contains an inorganic binder as a binder.

Although an organic binder tends to be degraded by UV, an inorganic binder may have a high level of weather resistance against UV and is preferable. While such high level of weather resistance might be also advantageous for indoor use, it is strongly desired for outdoor use, particularly for use under a severe environment such as in desert. When the hard coat layer contains a material having characteristics as an inorganic material, such as polyorganosiloxane, it will be improved in the adherence enough to avoid separation between the hard coat layer and the antistatic layer, so that the mirror will advantageously keep a high level of regular reflectance over a long term. While the inorganic binder is susceptible to crack to degrade the reflectance, the crack may be suppressed by the hard coat layer according to the present invention, so that the effect of the present invention will be more enhanced.

According to Claim 5, there is provided the solar reflective mirror described in any one of Claims 1 to 4, in which the antistatic layer contains electrically conductive fine inorganic particles.

Since the antistatic layer contains the electrically conductive fine inorganic particles, a high level of electro-conductivity will be achieved, which advantageously prevents adhesion of dust or sand on the mirror and thereby a good antifouling performance and a high-level weather resistance will be obtained.

According to Claim 6, there is provided the solar reflective mirror of Claim 5, in which the electrically conductive fine inorganic particles are tin oxide or doped-type tin oxide fine particles.

The present inventors found out a surprising effect that, with this structure, the electrical resistance may further be reduced under irradiation of UV or sunlight. For example, when the solar reflective mirror of the present invention is used outdoors, the sunlight irradiates on the solar reflective mirror and the electrical resistance is reduced and thereby the mirror is prevented from electrostatic adhesion of sand or the like.

A hypothetical mechanism of such effect is explained as follows at present. Tin oxide absorbs UV and it causes charge separation and electrons thus produced construct an electric conduction path. While tin oxide is generally reduced in the electro-conductivity since the surficial oxygen atoms catch the thus-produced electrons to produce oxygen ions, the oxygen ions then combine with holes produced by the charge separation induced by UV irradiation to return back to oxygen atoms, and then desorb from the surface. Oxygen is therefore no longer suppressive to the electro-conductivity and the electro-conductivity improves as a consequence. This is supposedly why the electrical resistance is reduced.

According to Claim 7, there is provided the solar reflective mirror of Claim 6, in which the fine particles of a doped-type tin oxide are a phosphorus-doped tin oxide.

According to Claim 8, there is provided the solar reflective mirror of any one of Claims 5 to 7, in which the antistatic layer contains 75% or more and 95% or less of the electrically conductive fine inorganic particles.

Since the antistatic layer contains 75% or more of the electrically conductive fine inorganic particles, a good level of electro- conductivity can be ensured and since the content is 95% or less, the mirror will advantageously be prevented from degrading the light translucency.

According to Claim 9, there is provided the solar reflective mirror of any one of Claims 1 to 8, in which the hard coat layer is composed of a resin material.

According to Claim 10, there is provided the solar reflective mirror of any one of Claims 1 to 9, in which the hard coat layer is composed of a polyorganosiloxane-based resin material.

The hard coat layer, which is composed of a polyorganosiloxane- based resin material, is preferable from the viewpoint of weather resistance, water repellency and scratch resistance. The present inventors also found out that, by using the hard coat layer composed of a polyorganosiloxane-based resin material in addition to the tin oxide or phosphorus-doped tin oxide, a still larger effect of reducing the electrical resistance under UV irradiation may be obtained. Accordingly, the electrostatic adhesion of dust or the like may largely be reduced.

In addition, since sand or the like is mainly composed of silicon oxide, if the hard coat layer provided to the topmost surface is composed of a polyorganosiloxane-based resin material, electrostatic charging becomes less likely to occur even if the hard coat layer is kept under friction with dust by virtue of resemblance of the composition, and thereby the surface is more effectively prevented from dust adhesion.

According to Claim 11, there is provided the solar reflective mirror of any one of Claims 1 to 10, in which the hard coat layer has a thickness of 1 µm or larger and 4 µm or smaller.

Due to its thickness of 1 µm or larger and 4 µm or smaller, the hard coat layer is thick enough to ensure the scratch resistance and is thin enough to avoid excessive elevation of the electrical resistance causing reduction in the antifouling performance.

In particular, in the case where the antistatic layer is provided under the hard coat layer which is an electrical insulator in many cases, an excessively thick hard coat layer may mask the effect of the antistatic layer. It is therefore preferable to adjust the thickness of the hard coat layer within the above-described range in view of ensuring the effect of the antistatic layer even when the insulating hard coat layer is used.

According to Claim 12, there is provided the solar reflective mirror of any one of Claims 1 to 11, in which the hard coat layer has a sliding angle of larger than 0° and 30° or smaller.

The hard coat layer having a sliding angle of larger than 0° and 30° or smaller is preferable from the viewpoint of antifouling performance, since such layer will have an improved water repellency and thereby the mirror will be less likely to catch thereon water such as rain or dew and accompanying adhesion of dust or sand. The effect is fully demonstrated particularly in the outdoor use, typically in desert which is a popular field for the solar reflective mirror.

According to Claim 13, there is provided the solar reflective mirror of any one of Claims 1 to 12, in which at least either one of the hard coat layer and the antistatic layer contains an UV absorber.

Since at least either one of the hard coat layer and the antistatic layer contains the UV absorber, the weather resistance is advantageously improved.

According to Claim 14, there is provided the solar reflective mirror of any one of Claims 1 to 13, in which the solar reflective mirror is a film mirror, and has a total thickness of 80 µm or larger and 300 µm or smaller.

The solar reflective mirror having a total thickness of 80 µm or larger and 300 µm or smaller is lightweight, flexible, and arbitrarily deformed, and is particularly preferable for use in condensation of sunlight, since it may be deformed into a concave shape with an arbitrary curvature.

According to Claim 15, there is provided the solar reflective mirror of any one of Claims 1 to 14, in which the solar reflective mirror has a surface roughness Ra of 0.01 µm or larger and 0.1 µm or smaller.

The solar reflective mirror, having a surface roughness Ra of 0.01 µm or larger will not be causative of sticking of the film called blocking which possibly occurs when the film is taken up in a roll during continuous film forming based on the roll-to-roll process, and the mirror having a thickness of 0.1 µm or smaller will be desirable since it will not degrade the regular reflectance due to scattering of light which possibly occurs in the process of reflection of sunlight. Since the mirror has a surface irregularity represented by a surface roughness Ra of 0.01 µm or larger, the coefficient of friction with sand or the like may increase and make the sand more likely to adhere to the surface. Notwithstanding, the sand adhesion is avoidable by the antistatic layer used in the present invention, and this is understood as making the effect of the present invention more remarkable.

According to Claim 16, there is provided a reflection device for solar heat power generation which is formed by bonding the solar reflective mirror of any one of Claims 1 to 15 to a supporting base while placing a tacky layer between the solar reflective mirror and the supporting base.

The reflection device for solar heat power generation, formed by bonding the solar reflective mirror to the supporting base while placing the tacky layer in between, is advantageous for its excellent scratch resistance, antifouling performance, and weather resistance.

Note that, in all inventions relevant to the solar reflective mirror, descriptions of "a good level of electro-conductivity is ensured" or "electrical resistance is prevented from elevating" mean that the mirror may be prevented from electrostatic adhesion of dust or sand, and this consequently takes a common effect of preventing the reflective layer from degrading and of avoiding lowering in the regular reflectance.

According to Claim 17, there is provided a functional film having a resin base, having a hard coat layer provided on the topmost surface of the functional film and having an antistatic layer provided between the resin base and the hard coat layer.

According to Claim 18, there is provided an antistatic composition for outdoor use, which includes a hard coat layer provided on the topmost surface on the light-incident side, and an antistatic layer provided under the hard coat layer, and
the antistatic layer contains fine particles of a tin oxide or a doped-type tin oxide.

### ADVANTAGEOUS EFFECTS OF THE INVENTION

According to the present invention, it is now possible to provide a solar reflective mirror which is excellent in the scratch resistance, antifouling performance, and weather resistance which means capability of keeping a good level of regular reflectance with respect to sunlight over a long term, even when installed in a severe environment over a long term, and also to provide a reflection device for solar heat power generation using the same, and a functional film.

### BRIEF DESCRIPTION OF DRAWINGS

FIG. 1 is a schematic sectional view illustrating a reflective film which serves as a base mirror of a solar reflective mirror.
FIG. 2A is a schematic sectional view illustrating a solar reflective mirror and a reflection device for solar heat power generation, which is the front mirror type.
FIG. 2B is a schematic sectional view illustrating a solar reflective mirror and a reflection device for solar heat power generation, which is the back side mirror type.
FIG 3A is a schematic sectional view illustrating a solar reflective mirror of Comparative Example 1.
FIG. 3B is a schematic sectional view illustrating a solar reflective mirror of Comparative Example 2.
FIG. 4A is a schematic sectional view illustrating a solar reflective mirror of Example 1.
FIG. 4B is a schematic sectional view illustrating a solar reflective mirror of Example 2.
FIG 4C is a schematic sectional view illustrating a solar reflective mirror of Example 3.
FIG. 4D is a schematic sectional view illustrating a solar reflective mirror of Example 4.
FIG. 4E is a schematic sectional view illustrating a solar reflective mirror of Example 5.

### DESCRIPTION OF EMBODIMENTS

The film mirror according to an embodiment of the present invention is a solar reflective mirror is characterized by having a reflective layer provided on a resin base, a hard coat layer on the topmost surface on the light-incident side and an antistatic layer between the hard coat layer and the reflective layer.

This structural feature is a technical feature common to all inventions according to Claim 1 to Claim 14. The solar reflective mirror of the present invention is feasible as a back side mirror-type one and a front mirror-type one. The back side mirror-type one characteristically has a resin base with a thickness of 10 µm or larger between the light incident side of the hard coat layer and the reflective layer, meanwhile the front mirror-type one characteristically has, or does not have, a resin base with a thickness of smaller than 10 µm between the light incident side of the hard coat layer and the reflective layer.

In desert, dirt is mostly ascribable to sand adhesion, unlike pollution in general areas. The topmost surface of the film mirror might exert the antifouling performance if given with water repellency and scratch resistance, but the antifouling performance is far from being excellent in view of fully prevent the dust adhesion. The present invention then succeeded in suppressing electrostatic dust adsorption, by forming an antistatic layer at an adjoining position to the topmost hard coat layer or with an extra-thin layer between the hard coat layer and the antistatic layer, and thereby demonstrating a high antifouling performance.

Accordingly, this embodiment mainly proposes a three-layer structure of "antifouling hard coat layer/antistatic layer/resin layer", as viewed from the topmost layer of the film mirror.

As the electrically conductive substance contained in the antistatic layer of this structure, an electrically conductive fine inorganic particles are preferably used from the viewpoint of weather resistance. Although the thicker the antistatic layer, the larger the electro-conductivity thereof, the thickness is preferably 100 nm or larger and 1 µm or smaller from the viewpoint of light translucency and inter-layer adherence. As the binder used for the antistatic layer, an inorganic binder is preferably used from the viewpoint of weather resistance.

The antifouling hard coat layer of this structure is preferably a polyorganosiloxane-based hard coat, from the viewpoint of weather resistance, water repellency and scratch resistance. The hard coat layer preferably has a thickness of 1 µm or larger and 4 µm or smaller, since a good level of scratch resistance will not be achieved if the layer is too thin, meanwhile the electrical resistance will elevate and thereby the antifouling performance will degrade if the film is too thick.

At least either one of the hard coat layer and the antistatic layer preferably contains a UV absorber.

By bonding the thus-formed film mirror to a rigid supporting base while using a tacky agent in between, an embodiment of reflection device for solar heat power generation may be achieved.

The solar reflective mirror of the present invention will be detailed below. While the embodiments described below include various limitations which are technically preferable in view of carrying out the present invention, the scope of the invention is by no means limited to the embodiments and illustrative examples hereinbelow.

### (1) Overview of Structure of Solar Reflective Mirror

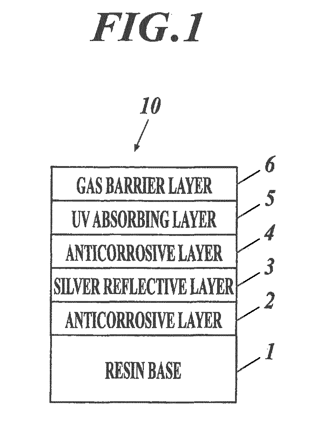

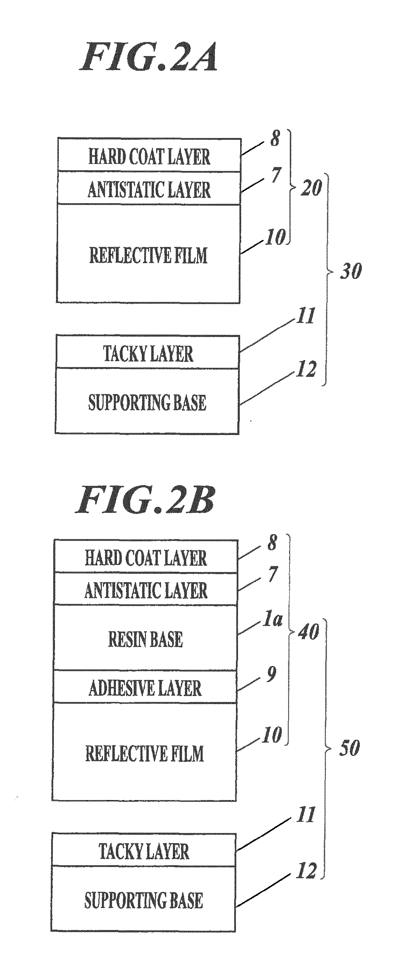

An example of the reflective film, which is a component of the solar reflective mirror of the present invention, will be explained with reference to FIG. 1. An overview of structure of the solar reflective mirror of the present invention will be explained with reference to FIG. 2A and FIG. 2B.

Typically as shown in FIG. 1, a reflective film 10 composing the main portion of the solar reflective mirror has an anticorrosive layer 2, a silver reflective layer 3, an anticorrosive layer 4, a UV absorbing layer 5, and a gas barrier layer 6, which are constitutive layers stacked in this order on a resin base 1.

The reflective film 10 is used as a base mirror which configures the base portion of the solar reflective mirror.

The solar reflective mirror of the present invention using such reflective film 10 is embodied in a front mirror-type solar reflective mirror 20 illustrated in FIG. 2A, or in a back side mirror-type solar reflective mirror 40 illustrated in FIG. 2B.

The front mirror-type solar reflective mirror 20 is formed, as illustrated in FIG. 2A, by stacking an antistatic layer 7 and a hard coat layer 8 in this order, on the surface of the gas barrier layer 6 of the reflective film 10.

The back side mirror-type solar reflective mirror 40 is formed, as illustrated in FIG. 2B, by stacking the antistatic layer 7 and the hard coat layer 8 in this order, on a resin base 1a which is provided over the surface of the gas barrier layer 6 of the reflective film 10, while placing an adhesive layer 9 in between.

As described above, a mirror of the back side mirror-type has the translucent resin base 1a provided between the reflective film 10 (silver reflective layer 3) and a set of the hard coat layer 8 and the antistatic layer 7 and has a thickness, ranging from the surface on the light-incident side to the silver reflective layer, of 10 µm or larger. On the other hand, the front mirror-type mirror has no resin base provided between the reflective film 10 (silver reflective layer 3) and a set of the hard coat layer 8 and the antistatic layer 7, or if dare provided, has a thickness of smaller than 10 µm when measured from the surface on the light-incident side to the silver reflective layer.

In the solar reflective mirrors 20, 40 of this embodiment, the hard coat layer 8 and the antistatic layer 7 are provided adjoining each other. While the hard coat layer 8 provided on the topmost surface side is preferably prevented from being electrified since the hard coat layer 8 adjoins the antistatic layer 7, the hard coat layer 8 is also prevented from being electrified alternatively by forming the antistatic layer 7 while placing an extra-thin layer (a thin film having a thickness of 1 µm or smaller, for example) between the hard coat layer 8 and the antistatic layer 7.

The solar reflective mirror is preferably manufactured by the roll-to-roll process, so that the solar reflective mirror preferably has a surface roughness Ra of 0.01 µm or larger from the viewpoint of preventing sticking of the film such as blocking in the process of manufacturing, and preferably has a surface roughness Ra of 0.1 µm or smaller from the viewpoint of preventing the regular reflectance from being reduced due to scattering of light possibly occurs when the sunlight is reflected thereon.

The surface of the topmost layer composing the solar reflective mirror having the antistatic layer preferably has an electrical resistance of 1.0×10⁻³ to 1.0×10¹² Ω·□, and more preferably 3.0×10⁹ to 2.0×10¹¹ Ω·□. Furthermore, the surface of the topmost layer of the solar reflective mirror preferably has a pencil hardness of H or larger and smaller than 6H, and preferably produces 30 or less scratch lines in the steel wool test under a 500 g/cm² load.

The solar reflective mirror described above is merely an illustrative example, and may alternatively have an additional layer, or conversely a certain layer is omissible from the structure described above.

The individual constitutive layers will be detailed below.

### (2) Resin Base

Conventionally known various types of resin film are usable as the resin base. The examples include cellulose ester-based film, polyester-based film, polycarbonate-based film, polyarylate-based film, polysulfone (including polyethersulfone)-based film, polyester films such as polyethylene terephthalate and polyethylene naphthalate, polyethylene film, polypropylene film, cellophane, cellulose diacetate film, cellulose triacetate film, cellulose acetate propionate film, cellulose acetate butyrate film, polyvinylidene chloride film, polyvinyl alcohol film, ethylene vinyl alcohol film, syndiotactic polystyrene-based film, polycarbonate film, norbornene-based resin film, polymethylpentene film, polyetherketone film, polyetherketone imide film, polyamide film, fluorine-containing resin film, nylon film, polymethyl methacrylate film, and acryl film. Among them, polycarbonate-based film, polyester-based film, norbornene-based resin film, cellulose ester-based film, and acryl film are preferable.

In particular, polyester-based film and acryl film are preferably used. These films may be manufactured by melt casting or solvent casting.

For the resin base 1a directed to use in the back side mirror-type solar reflective mirror 40, acryl film is preferably used.

The thickness of the resin base is preferably determined to an appropriate value, depending on types of resin, purpose and so forth. The thickness generally falls in the range from 10 to 300 µm, preferably from 20 to 200 µm, and more preferably from 30 to 100 µm.

### (3) Anticorrosive Layer

The anticorrosive layer is preferably provided adjoining the reflective layer. The anticorrosive layer is preferably provided particularly for the case where the reflective layer is a silver reflective layer. In particular, the anticorrosive layer preferably adjoins the reflective layer on the light-incident side thereof. The anticorrosive layer may alternatively be provided adjoining both sides of the reflective layer.

The anticorrosive layer contains a corrosion inhibitor. The corrosion inhibitor is roughly classified into those having a group capable of adsorbing metal, in particular silver, and those having an antioxidative performance (also referred to as antioxidant), both of which are preferably used. The anticorrosive layer preferably contains at least either one of the corrosion inhibitor having a group capable of adsorbing metal, in particular silver, and the antioxidant. "Corrosion" herein means an incident such that metal (silver) is chemically or electro-chemically corroded or degraded in quality, due to a surrounding environmental substance (see JIS Z0103-2004).

In the anticorrosive layer, a resin may be used as a binder for retaining the corrosion inhibitor. Examples of usable resin include cellulose esters, polyesters, polycarbonates, polyarylates, polysulfones (containing polyethersulfone), polyesters such as polyethylene terephthalate and polyethylene naphthalate, polyethylene, polypropylene, cellophane, cellulose diacetate, cellulose triacetate, cellulose acetate propionate, cellulose acetate butyrate, polyvinylidene chloride, polyvinyl alcohol, ethylene vinyl alcohol, syndiotactic polystyrenes, polycarbonate, norbornene resins, polymethylpentene, polyetherketone, polyetherketone imide, polyamide, fluorine-containing resin, nylon, polymethyl methacrylate, and acryl-based resin. Among them, acryl-based resin is preferable. The anticorrosive layer preferably has a thickness of 30 nm or larger and 1 µm or smaller.

Content of the corrosion inhibitor preferably falls in the range from 0.1 to 1.0 g/m² in general, the optimum value of which may vary depending on compound to be used.

The corrosion inhibitor will be detailed below.

### (3-1) Corrosion Inhibitor

The corrosion inhibitor having a silver-adsorbing group is preferably at least one species selected from amines and derivatives thereof, compound having pyrrole ring, compound having triazole ring, compound having pyrazole ring, compound having thiazole ring, compound having imidazole ring, compound having indazole ring, copper chelate compounds, thioureas, compound having mercapto group, naphthalenes, and mixtures of them.

The amines and derivatives thereof are exemplified by ethylamine, laurylamine, tri-*n*-butylamine, O-toluidine, diphenylamine, ethylenediamine, diethylenetriamine, triethylenetetramine, tetraethylenepentamine, monoethanolamine, diethanolamine, triethanolamine, 2N-dimethylethanolamine, 2-amino-2-methyl-1,3-propanediol, acetamide, acrylamide, benzamide, *p*-ethoxychrysoidine, dicyclohexylammonium nitrite, dicyclohexylammonium salicylate, monoethanolamine benzoate, dicyclohexylammonium benzoate, diisopropylammonium benzoate, diisopropylammonium nitrite, cyclohexylamine carbamate, nitronaphthalene ammonium nitrite, cyclohexylamine benzoate, dicyclohexyl ammonium cyclohexane carboxylate, cyclohexylaminecyclohexane carboxylate, dicyclohexyl ammonium acrylate, cyclohexylamine acrylate, and mixtures of them.

The compound having pyrrole ring is exemplified by N-butyl-2,5-dimethylpyrrole, N-phenyl-2,5-dimethylpyrrole, N-phenyl-3-formyl-2,5-dimethylpyrrole, N-phenyl-3,4-diformyl-2,5-dimethylpyrrole, and mixtures of them.

The compound having triazole ring is exemplified by 1,2,3-triazole, 1,2,4-triazole, 3-mercapto-1,2,4-triazole, 3-hydroxy-1,2,4-triazole, 3-methyl-1,2,4-triazole, 1-methyl-1,2,4-triazole, 1-methyl-3-mercapto-1,2,4-triazole, 4-methyl-1,2,3-triazole, benzotriazole, tolyltriazole, 1-hydroxybenzotriazole, 4,5,6,7-tetrahydrotriazole, 3-amino-1,2,4-triazole, 3-amino-5-methyl-1,2,4-triazole, carboxybenzotriazole, 2-(2'-hydroxy-5'-methylphenyl)benzotriazole, 2-(2'-hydroxy-5'-*tert*-butylphenyl)benzotriazole, 2-(2'-hydroxy-3'5'-di-*tert*-butylphenyl)benzotriazole, 2-(2'-hydroxy-4-octoxyphenyl)benzotriazole, and mixtures of them.

The compound having pyrazole ring is exemplified by pyrazole, pyrazoline, pyrazolone, pyrazolidine, pyrazolidone, 3,5-dimethylpyrazole, 3-methyl-5-hydroxypyrazole, 4-aminopyrazole, and mixtures of them.

The compound having thiazole ring is exemplified by thiazole, thiazoline, thiazolone, thiazolidine, thiazolidone, isothiazole, benzothiazole, 2-N,N-diethylthiobenzothiazole, *p*-dimethylaminobenzalrhodanine, 2-mercaptobenzothiazole, and mixtures of them.

The compound having imidazole ring is exemplified by imidazole, histidine, 2-heptadecylimidazole, 2-methylimidazole, 2-ethyl-4-methylimidazole, 2-phenylimidazole, 2-undecylimidazole, 1-benzyl-2-methylimidazole, 2-phenyl-4-methylimidazole, 1-cyanoethyl-2-methylimidazole, 1-cyanoethyl-2-phenylimidazole, 1-cyanoethyl-2-ethyl-4-methylimidazole, 1-cyanoethyl-2-undecylimidazole, 2-phenyl-4-methyl-5-hydromethylimidazole, 2-phenyl-4,5-dihydroxymethylimidazole, 4-formylimidazole, 2-methyl-4-formylimidazole, 2-phenyl-4-formylimidazole, 4-methyl-5-formylimidazole, 2-ethyl-4-methyl-5-formylimidazole, 2-phenyl-4-methyl-4-formylimidazole, 2-mercapto benzoimidazole, and mixtures of them.

The compound having indazole ring is exemplified by 4-chloroindazole, 4-nitroindazole, 5-nitroindazole, 4-chloro-5-nitroindazole, and mixtures of them.

The copper chelate compounds are exemplified by acetylacetone copper, ethylenediamine copper, phthalocyanine copper, ethylenediamine tetraacetate copper, hydroxyquinoline copper, and mixtures of them.

The thioureas are exemplified by thiourea, guanylthiourea, and mixtures of them.

The compound having mercapto group, including the materials already mentioned above, is exemplified by mercaptoacetic acid, thiophenol, 1,2-ethanediol, 3-mercapto-1,2,4-triazole, 1-methyl-3-mercapto-1,2,4-triazole, 2-mercaptobenzothiazole, 2-mercaptobenzoimidazole, glycol dimercaptoacetate, 3-mercaptopropyl trimethoxysilane, and mixtures of them.

The naphthalenes are exemplified by thionalide.

### (4) Reflective Layer

The reflective layer in the present invention is a layer composed of metal or the like, which functions to reflect sunlight. The reflective layer preferably has a surface reflectance of 80% or larger, and more preferably 90% or larger. The reflective layer is preferably formed by including a material which contains any element selected from the group consisting of Al, Ag, Cr, Cu, Ni, Ti, Mg, Rh, Pt and Au. Among them, from the viewpoint of reflectance and corrosion resistance, the reflective layer preferably contains Al or Ag as the major constituent, and two or more layers of these metals may be formed. It is particularly preferable that the reflective layer in the present invention is a silver reflective layer which contains silver as the major constituent.

The silver reflective layer may be manufactured either by wet process or dry process.

The wet process is a general term for plating process, which is a method of allowing metal to deposit from solution, to thereby form a film. The process is specifically exemplified by a method based on silver mirror reaction.

Meanwhile, the dry process is a general term for vacuum film-forming method, and is specifically exemplified by resistance heating vacuum deposition, electron beam heating vacuum deposition, ion plating, ion beam-assisted vacuum deposition, and sputtering. In particular, vacuum deposition is preferably used in the present invention, since the process is suitable to the roll-to-roll process characterized by continuous film forming. For example, the method of manufacturing the solar reflective mirror is preferably a method of manufacturing in which the silver reflective layer is formed by silver deposition.

From the viewpoint of reflectance and so forth, the silver reflective layer preferably has a thickness of 10 to 200 nm, and more preferably 30 to 150 nm.

While the silver reflective layer may be placed on the light-incident side (front side) or on the opposite side (back side), it is preferably placed on the light-incident side for the purpose of preventing the resin from being degraded by sunlight.

### (5) UV Absorbing Layer

The UV absorbing layer is a layer which contains a UV absorber, aimed at preventing the solar reflective mirror from degrading due to sunlight and UV. The UV absorbing layer is preferably provided on the light-incident side of the resin base. If the anticorrosive layer is used, the UV absorbing layer is preferably provided on the light-incident side of the anticorrosive layer.

For the UV absorbing layer, a resin may be used as a binder for retaining the UV absorber. The resin usable herein is exemplified by cellulose esters, polyesters, polycarbonates, polyarylates, polysulfones (including polyethersulfone), polyesters such as polyethylene terephthalate and polyethylene naphthalate, polyethylene, polypropylene, cellophane, cellulose diacetate, cellulose triacetate, cellulose acetate propionate, cellulose acetate butyrate, polyvinylidene chloride, polyvinyl alcohol, ethylene vinyl alcohol, syndiotactic polystyrenes, polycarbonate, norbornene resins, polymethylpentene, polyetherketone, polyetherketone imide, polyamide, fluorine-containing resin, nylon, polymethyl methacrylate, and acrylic resins. Among them, acrylic resins are preferably used. The UV absorbing layer is preferably 1 µm to 200 µm thick.

Besides providing the UV absorbing layer to the solar reflective mirror (reflective film), any one of the constitutive layers provided on the light-incident side of the resin base may be added with the UV absorber so as to make such layer serve as the UV absorbing layer. It is also preferable to add the UV absorber to the hard coat layer described later.

The UV absorber is exemplified by benzophenone-based, benzotriazole-based, phenyl salicylate-based and triazine-based compounds as organic UV absorbers, and also by titanium oxide, zinc oxide, cerium oxide and iron oxide as inorganic UV absorbers.

The benzophenone-based UV absorber is exemplified by 2,4-dihydroxy-benzophenone, 2-hydroxy-4-methoxy-benzophenone, 2-hydroxy-4-n-octoxy-benzophenone, 2-hydroxy-4-dodecyloxy-benzophenone, 2-hydroxy-4-octadecyloxy-benzophenone, 2,2'-dihydroxy-4-methoxy-benzophenone, 2,2'-dihydroxy-4,4'-dimethoxy-benzophenone, and 2,2',4,4'-tetrahydroxy-benzophenone.

The benzotriazole-based UV absorber is exemplified by 2-(2'-hydroxy-5-methylphenyl)benzotriazole, 2-(2'-hydroxy-3',5'-di-*t*-butylphenyl)benzotriazole, and 2-(2'-hydroxy-3'-*t*-butyl-5'-methylphenyl)benzotriazole.

The phenyl salicylate-based UV absorber is exemplified by phenyl salicylate, and 2-4-di-*t*-butylphenyl-3,5-di-*t*-butyl-4-hydroxybenzoate. The hindered amine-based UV absorber is exemplified by bis(2,2,6,6-tetra methylpiperidine-4-yl) sebacate.

The triazine-based UV absorber is exemplified by 2,4-diphenyl-6-(2-hydroxy-4-methoxyphenyl)-1,3,5-triazine, 2,4-diphenyl-6-(2-hydroxy-4-ethoxyphenyl)-1,3, 5-triazine, 2,4-diphenyl-(2-hydroxy-4-propoxyphenyl)-1,3,5-triazine, 2,4-diphenyl-(2-hydroxy-4-butoxyphenyl)-1,3,5-triazine, 2,4-diphenyl-6-(2-hydroxy-4-butoxyphenyl)-1,3,5-triazine, 2,4-diphenyl-6-(2-hydroxy-4-hexyloxyphenyl)-1,3,5-triazine, 2,4-diphenyl-6-(2-hydroxy-4-octyloxyphenyl)-1,3,5-triazine, 2,4-diphenyl-6-(2-hydroxy-4-dodecyloxyphenyl)-1,3,5-triazine, and 2,4-diphenyl-6-(2-hydroxy-4-benzyloxyphenyl)-1,3,5-triazine.

Besides the compounds described above, the UV absorber usable herein may be a compound capable of converting UV energy into vibration energy in the molecular thereof, and then emitting the vibration energy in the form of thermal energy or the like. It is further possible to concomitantly use any compound capable of demonstrating the effect when used together with antioxidant or colorant, or a photo-stabilizer, called quencher, which acts just like a photo-energy converting agent. Note that, when the UV absorber is used, the UV absorber need be selected so that the light absorption wavelength thereof does not overlap the effective wavelength of a photo-polymerization initiator.

When a general UV absorber is used, it is effective to use a photo-polymerization initiator capable of producing a radical in response to the visible light.

The amount of use of the UV absorber is 0.1 to 20% by mass, preferably 1 to 15% by mass, and more preferably 3 to 10% by mass. In these ranges, the weather resistance may be improved while keeping a good level of adherence with the other constitutive layers.

### (6) Gas Barrier Layer

The gas barrier layer may be provided on the light-incident side of the resin base. In this case, the gas barrier layer is preferably provided on the light-incident side of the UV absorbing layer.

While the gas barrier layer is intrinsically directed to prevent the resin base and the individual constitutive layers supported by the resin base from degrading due to changes in humidity, in particular high humidity, it may be given any special function or adapted to special applications. Various embodiments of gas barrier layer may be provided so long as they have the preventive functions described above. Since a large amount of change in humidity is observed in desert, where the reflective mirror is often used than in room, the gas barrier layer is preferably provided.

Moisture-proof property of the gas barrier layer is preferably represented by a water vapor transmittance at 40°C, 90%RH of 1 g/m²•day or below, more preferably 0.5 g/m²•day or below, and furthermore preferably 0.2 g/m²•day or below.

Oxygen transmittance of the gas barrier layer, at a measurement temperature of 23°C and a humidity of 90%RH, is preferably 0.6 ml/m²/day/atm or below.

Methods of forming the gas barrier layer are exemplified by those for forming an inorganic oxide layer such as vacuum deposition, sputtering, ion beam-assisted vacuum deposition, and chemical vapor deposition. Another preferable method is such as coating a precursor of the inorganic oxide by the sol-gel process, and subjecting the coated film to heating and/or UV irradiation to thereby form the inorganic oxide film.

### (6-1) Inorganic Oxide

The inorganic oxide is formed by locally heating a sol obtained from an organometallic compound as a raw material. It is typically an oxide of an element contained in the organometallic compound, such as silicon (Si), aluminum (Al), zirconium (Zr), titanium (Ti), tantalum (Ta), zinc (Zn), barium (Ba), indium (In), tin (Sn) or niobium (Nb), and is typically silicon oxide, aluminum oxide, zirconium oxide or the like. Among them, silicon oxide is preferable.

In the present invention, the inorganic oxide is preferably formed by so-called, sol-gel process or polysilazane process. The sol-gel process is a method of forming an inorganic oxide from an organometallic compound which is a precursor of the inorganic oxide. The polysilazane process is a method of forming an inorganic oxide from polysilazane which is a precursor of the inorganic oxide.

### (6-2) Precursor of Inorganic Oxide

The gas barrier layer is preferably formed by coating a precursor capable of producing an inorganic oxide when heated, and then by heating the precursor by a general method of heating, wherein local heating is preferable. The precursor is preferably a sol-type organometallic compound or polysilazane.

### (6-3) Organometallic Compound

The organometallic compound preferably contains at least one element selected from silicon (Si), aluminum (Al), lithium (Li), zirconium (Zr), titanium (Ti), tantalum (Ta), zinc (Zn), barium (Ba), indium (In), tin (Sn), lanthanum (La), yttrium (Y) and niobium (Nb). In particular, the organometallic compound preferably contains at least one element selected from silicon (Si), aluminum (Al), lithium (Li), zirconium (Zr), titanium (Ti), zinc (Zn) and barium (Ba). It is further preferable to contain at least one element selected from silicon (Si), aluminum (Al) and lithium (Li).

The organometallic compound is not specifically limited so long as it may be hydrolyzable, where preferable organometallic compound is exemplified by metal alkoxide.

The metal alkoxide is represented by the formula (1) below:

MR²ₘ(OR¹)ₙ₋ₘ (1)

In the formula (1), M represents a metal having an oxidation number of n. Each of R¹ and R² independently represents an alkyl group. m represents an integer of 0 to (n-1).

R¹ and R² may be same or different. Each of R¹ and R² is preferably a C₄ or shorter alkyl group, and is preferably a lower alkyl group such as methyl group CH₃ (represented by Me, hereinafter), ethyl group C₂H₅ (represented by Et, hereinafter), propyl group C₃H₇ (represented by Pr, hereinafter), isopropyl group *i*-C₃H₇ (represented by *i*-Pr, hereinafter), butyl group C₄H₉ (represented by Bu, hereinafter), or isobutyl group i-C₄H₉ (represented by *i*-Bu, hereinafter).

Preferable examples of the metal alkoxide represented by the formula (1) above include lithium ethoxide LiOEt, niobium ethoxide Nb(OEt)₅, magnesium isopropoxide Mg(OPr-i)₂, aluminum isopropoxide Al(OPr-i)₃, zinc propoxide Zn(OPr)₂, tetraethoxysilane Si(OEt)₄, titanium isopropoxide Ti(OPr-i)₄, barium ethoxide Ba(OEt)₂, barium isopropoxide Ba(OPr-i)₂, triethoxyborane B(OEt)₃, zirconium propoxide Zn(OPr)₄, lanthanum propoxide La(OPr)₃, yttrium propoxide Y(OPr)₃, and lead isopropoxide Pb(OPr-i)₂. All of these metal alkoxides are commercially available, and readily available. Also oligomeric condensates obtained by partial hydrolysis of the metal alkoxides are commercially available, and may be used as the source materials.

### (6-4) Sol-Gel Method

The "sol-gel method" herein means a process of obtaining a sol of hydroxide typically by hydrolyzing an organometallic compound, dehydrating the hydroxide to obtain a gel, and heating the gel, to thereby obtain a metal oxide glass with a certain product form (film, particle, fiber, etc.). It is also possible to obtain a multi-component metal oxide film, typically by a method of mixing a plurality of different kinds of sol solution, a method of adding other metal ion, or the like.

Specifically, the inorganic oxide is preferably manufactured by a sol-gel method (process) having the steps below.

That is, it is particularly preferable to manufacture the inorganic oxide by a sol-gel process having the steps below from the viewpoint that the process will successfully prevent micropore generation or will prevent the film degradation through the heating at high temperatures. The steps are: a step of allowing hydrolysis and dehydration condensation of an organometallic compound to proceed in a reaction solution which contains at least water and an organic solvent, in the presence of boron ion, using a halogen ion as a catalyst while adjusting the pH at 4.5 to 5.0 to thereby obtain a reaction product and a step of vitrifying the reaction product by heating the product at 200°C or below.

In the sol-gel process, the organometallic compound used as a source material may be any of hydrolyzable ones without special limitation. Preferable organometallic compound is exemplified by metal alkoxide described above.

In the sol-gel process, the organometallic compound described above may be used for the reaction in its intact form or preferably used as diluted with a solvent in order to readily control the reaction. The solvent for dilution is arbitrary so long as it can dissolve the organometallic compound and is homogeneously miscible with water. This sort of solvent for dilution is preferably exemplified by aliphatic lower alcohols which include methanol, ethanol, propanol, isopropanol, butanol, isobutanol, ethylene glycol, propylene glycol, and mixtures of them. Also a mixed solvent of butanol, cellosolve and butylcellosolve or a mixed solvent of xylol, cellosolve acetate, methyl isobutyl ketone and cyclohexane are usable.

For the case where the metal in the organometallic compound is Ca, Mg, Al or the like, the compound may produce a hydroxide through reaction with water contained in the reaction liquid, or may produce a carbonate if in the presence of carbonate ion CO₃²⁻, so that the reaction liquid is preferably added with an alcohol solution of triethanolamine as a masking agent. Concentration of the organometallic compound dissolved into the solvent is preferably 70% by mass or below, and is more preferably diluted to fall in the range from 5 to 70% by mass.

The reaction liquid used in the sol-gel process contains at least water and an organic solvent. The organic solvent is arbitrary so long as it can give a homogeneous solution with water, and in general, preferably exemplified by those similar to aliphatic lower alcohols used for diluting the organometallic compound. Among the aliphatic lower alcohols, rather than methanol and ethanol, those having larger numbers of carbon atoms such as propanol, isopropanol, butanol and isobutanol are more preferable. This is because growth of the resultant metal oxide glass film may be stabilized. In the reaction liquid, ratio of water or concentration of water preferably falls in the range from 0.2 to 50 mol/L.

In the sol-gel process, in the reaction liquid and under the presence of boron ion, the organometallic compound is hydrolyzed using halogen ion(s) as a catalyst. Compounds which yield boron ion B³⁺ are preferably trialkoxyboranes B(OR)₃. Among them, triethoxyborane B(OEt)₃ is more preferable. B³⁺ ion concentration in the reaction liquid preferably falls in the range from 1.0 to 10.0 mol/L.

The halogen ion is preferably exemplified by fluorine ion and/or chlorine ion. In other words, fluorine ion alone, chlorine ion alone or mixture of the two is adoptable. Compounds usable herein are arbitrary so long as they can produce fluorine ion and/or chlorine ion in the reaction liquid described above, where fluorine ion source is preferably exemplified by ammonium hydrogen fluoride NH₄HF•HF, sodium fluoride NaF and so forth, meanwhile chlorine ion source is preferably exemplified by ammonium chloride NH₄Cl and so forth.

While concentration of halogen ion in the reaction liquid may vary depending on the thickness of the target film to be manufactured, which is composed of an inorganic composition having an inorganic matrix, and other conditions, the concentration in general is preferably adjusted in the range from 0.001 to 2 mol/kg, and particularly from 0.002 to 0.3 mol/kg, relative to the total mass of the reaction liquid inclusive of the catalyst. If the concentration of halogen ion is lower than 0.001 mol/kg, the organometallic compound may be less likely to be fully hydrolyzed, and this makes formation of the film difficult. On the other hand, if the concentration of halogen ion exceeds 2 mol/kg, the resultant inorganic matrix (metal oxide glass) tends to be non-uniform, and again this is not preferable.

If boron, used in the process of reaction, is to be remained as B₂O₃ component in the design composition of the resultant inorganic matrix, the product may be obtained while being added with an organoboron compound, the concentration of which is calculated based on the content thereof. On the other hand, if boron is to be removed, boron may be removed by evaporation in the form of boron methyl ester by heating the obtained film under the presence of methanol as a solvent or while being dipped in methanol.

In the process of subjecting the organometallic compound to hydrolysis and dehydration condensation to obtain the reaction product, a main solution, which is obtained by dissolving a predetermined amount of organometallic compound into a predetermined amount of mixed solvent containing water and an organic solvent, is mixed with a predetermined amount of reaction liquid containing a predetermined amount of halogen ion according to a predetermined ratio, the mixture is thoroughly stirred to obtain a homogeneous reaction liquid, the reaction liquid is adjusted to a desired pH value using an acid or alkali, and then allowed to ripen for several hours to thereby obtain the reaction product. A predetermined amount of the boron compound is preliminarily mixed and dissolved in the main solution or in the reaction liquid. When alkoxyborane is used, it is advantageous to dissolve it into the main solution together with other organometallic compound.

pH of the reaction liquid is selectable depending of purposes. In the case where the target product is a film composed of an inorganic composition having an inorganic matrix (metal oxide glass), the reaction liquid is preferably ripened while adjusting the pH in the range from 4.5 to 5 using an acid such as hydrochloric acid. In this case, it is convenient to use, as an indicator, a mixture of methyl red and bromocresol green.

In the sol-gel process, the reaction product may alternatively be produced simply by adding the main solution and the reaction liquid (containing B³⁺ and halogen ions), with the same composition and the same concentration, step by step at a constant ratio of mixing, while adjusting the pH of the reaction liquid to a predetermined value. The concentration of the reaction liquid is variable within a range of ±50% by mass, the water concentration (containing acid or alkali) is variable within a range of ±30% by mass, and the halogen ion concentration is variable within a range of ±30% by mass.

Next, the reaction product obtained in the previous step (ripened reaction liquid) is heated at a temperature of 200°C or below, to thereby allow the product to dry and vitrify. In the heating, it is preferable to carefully and gradually elevate the temperature particularly in the temperature range from 50 to 70°C as a preliminary drying (solvent vaporization) and then the temperature is further elevated. The drying is important for the case of film forming in order to obtain a void-free film. After the preliminary drying, the heating and drying temperature is preferably 70 to 150°C, and more preferably 80 to 130°C.

### (7) Antistatic Layer

The antistatic layer serves to prevent the hard coat layer, provided on the topmost surface of the solar reflective mirror, from being electrically charged.

One known technique of imparting the antistatic layer with an antistatic function is to impart the antistatic layer with electro-conductivity to thereby reduce the electrical resistance of the antistatic layer.

Such antistatic technique includes a method of allowing the antistatic layer to contain an electrically conductive filler dispersedly as an electrically conductive substance, a method of using an electrically conductive polymer, a method of adding a metal compound dispersedly or surface coating, a method of internally adding an anionic compound such as organosulfonic acid or organophosphoric acid, a method of using a surfactant-type low-molecular-weight antistatic agent such as polyoxyethylene alkylamine, polyoxyethylene alkenylamine, glycerin fatty acid ester or the like, and a method of allowing an electrically conductive fine particle such as carbon black to disperse. In particular, the method of allowing the antistatic layer to contain an electrically conductive filler dispersedly as an electrically conductive substance is preferably used.

Referring now to electrical resistance of the antistatic layer, the resistance of coated film is roughly classified into intra-particle resistance and contact resistance. The intra-particle resistance is affected by dose of foreign metal, amount of oxygen defect and crystallinity. On the other hand, the contact resistance is affected by diameter and geometry of the particle, dispersibility of the fine particle in paint, and electro-conductivity of the binder resin. Since the film having relatively large electro-conductivity is supposed to be affected by the contact resistance larger than the intra-particle resistance, so that it is important to form an electric conduction path by controlling the particle state.

The antistatic layer preferably has an antistatic performance through inclusion of the electrically conductive filler.

The electrically conductive filler to be contained in the antistatic layer is exemplified by electrically conductive fine inorganic particles. Among them, a metal fine particle and an electrically conductive fine inorganic oxide particle are usable. In particular, the electrically conductive fine inorganic oxide particle is preferably used.

The fine metal particle is exemplified by those composed of gold, silver, palladium, ruthenium, rhodium, osmium, iridium, tin, antimony, indium and so forth.

The fine inorganic oxide particle is exemplified by indium- antimony pentoxide, tin oxide, zinc oxide and inorganic double oxide particle such as ITO (indium-doped tin oxide), ATO (antimony-doped tin oxide) and phosphorus-doped oxide. Among them, tin oxide and tin oxide doped with other metal (phosphorus-doped tin oxide, for example) are preferably used since the electrical resistance may further be reduced by UV irradiation or sunlight irradiation, and thereby electrostatic adhesion of dust may be prevented more effectively. Since the antistatic layer absorbs UV, it now becomes possible to protect the layers which lie below the antistatic layer.

In order to avoid degradation of translucency of the antistatic layer, the electrically conductive filler dispersed therein preferably has a primary particle size of 1 to 100 nm, and particularly 1 to 50 nm. In view of ensuring a good level of electro-conductivity, the particles need be appropriately close to each other, so that the particle size is preferably 1 nm or larger. The particle size exceeding 100 nm is not preferable since the light may be reflected and the translucency may degrade.

The electrically conductive fine inorganic oxide particle may be any of those commercially available, and specifically exemplified by CELNAX Series (from Nissan Chemical Industries, Ltd.), P-30, P-32, P-35, P-45, P-120, P-130 (all from JGC Catalysts and Chemicals Ltd.), and T-1, S-1, S-2000, EP SP2 (all from Mitsubishi Materials Electronic Chemicals Co., Ltd.).

The antistatic layer may use an organic binder or inorganic binder as a binder for retaining the electrically conductive filler.

The organic binder may be a resin, which is exemplified by acryl-based resin, cycloolefin-based resin, and polycarbonate-based resin. Also a hard coat may be used as an organic binder, which is exemplified by UV-curable polyfunctional acrylic resin, urethane acrylate, epoxy acrylate, oxetane-based resin, and polyfunctional oxetane-based resin.

The inorganic binder is preferably exemplified by inorganic oxide-based binder (this may be an inorganic oxide-based binder obtained by the sol-gel process), and tetrafunctional inorganic binder. Preferable examples of the inorganic oxide-based binder include silicon dioxide, titanium oxide, aluminum oxide and strontium oxide. Silicon dioxide is particularly preferable. Preferable examples of the tetrafunctional inorganic binder include polysilazane (for example, Aquamica (trade name, from AZ Electronic Materials)), siloxane-based compound (for example, Colcoat P (from Colcoat Co., Ltd.)), mixture of alkyl silicate and metal alcoholate such as FJ803 (from GRANDEX), and alumina sol (from Kawaken Fine Chemicals Co., Ltd.). As the tetrafunctional inorganic binder, also usable is a sol-gel solution mainly composed of tetraethoxysilane added with a catalyst.

Materials having both of organic and inorganic properties are exemplified by polyorganosiloxane, silicone resin, silica-modified acryl resin, and polysilazane. These materials may be understood as an organic binder, or as an inorganic binder. While a mixture of an inorganic binder and an organic binder may be used as the binder in the antistatic layer, it is preferable that the inorganic binder configures the entire portion. When the binder is configured by the inorganic binder, the solar reflective mirror will have a good weather resistance against UV even if used outdoors, and preferably keeps a high level of reflectance over a long term. In the case where the hard coat layer is formed using any of polyorganosiloxane, silicone resin and silica-modified acryl resin, which are preferable materials for composing the hard coat layer, the antistatic layer containing an inorganic binder as the binder will improve adherence between itself and the hard coat layer and preferably prevents a problem of degradation in the reflectivity due to separation of layers. While the inorganic binder is susceptible to crack as compared with the organic binder, the materials mentioned above are relatively less likely to crack and therefore preferable. Preventive effects against crack, chipping, and scattering of chips may additionally be obtained by providing the hard coat layer as an upper layer over the antistatic layer and this makes the brittle inorganic binder usable without problems. Since many of these materials have relatively large refractive index, use of these materials will increase the reflected light and will therefore enhance the reflection efficiency.

The antistatic layer may be formed by any of publicly known methods of coating, such as gravure coating, reverse coating and die coating.

The antistatic layer preferably has a thickness of 100 nm or larger and 1 µm or smaller. If the antistatic layer is thinner than 100 nm, the electrically conductive filler may protrude from the antistatic layer to thereby degrade the surface smoothness. Meanwhile, if the antistatic layer is thicker than 1 µm, the translucency may degrade. The thickness is more preferably 180 nm or larger and 1 µm or smaller. By adjusting the thickness of the antistatic layer to 180 nm or larger, the electrical resistance is preferably decreased to a large degree upon being irradiated by sunlight or UV.

The antistatic layer preferably contains 75% or more and 95% or less of electrically conductive filler (electrically conductive fine inorganic particle). If the content of the electrically conductive filler is smaller than 75%, a sufficient level of electro-conductivity will not be ensured. Meanwhile, if the content of electrically conductive filler exceeds 95%, the translucency will degrade.

Methods of evaluating the antistatic layer are exemplified below.

### (Electrical Resistance)

Electrical resistance is measured in compliance with JIS K7194 standard. A piece of film mirror used as a sample is allowed to stand in an environment with a humidity of 50% at 50°C for 2 hours or longer, and then using Hiresta from Mitsubishi Chemical Co., Ltd., the surface electrical resistance of the sample placed on an electrically conductive metal plate is measured via a probe.

### (Triboelectric Charging Test)

Triboelectric charging with a polyester fabric is measured in compliance with a method of measuring triboelectric charging specified by JIS L1094 "Testing Methods for Electrostatic Propensity of Woven and Knitted Fabrics". In the test, polyester 8-2 specified by JIS L0803 "Standard Adjacent Fabrics for Staining of Colour Fastness Test" is used as an abrading cloth, which is brought into frictional contact with the film mirror piece as a sample to electrify the surface thereof, and the electrification voltage is measured.

### (Dust Adhesion Test (Ash Test))

A film mirror piece, cut into A4 size to be used as a sample, was conditioned for 24 hours in a measurement atmosphere of 23°C, 30%RH. The surface of the thus-conditioned film mirror was rubbed reciprocatingly 10 times with an abrading cloth (100% wool). Immediately thereafter, the film mirror piece was brought close to cigarette ash which was preliminarily dried at 70°C for one hour, and the distance at which attraction of ash occurs was measured. The grades ○ and Δ listed below are acceptable:
○: ash did not adhere to film even if brought into contact therewith;
Δ: ash adhered to film when brought into contact therewith; and
×: ash attracted by film when only brought closer thereto.

### (8) Hard Coat Layer

The hard coat layer is a constitutive layer provided as the topmost layer or outermost layer of the solar reflective mirror. The hard coat layer is designed to shunt electric charge generated in the hard coat layer to the antistatic layer. In this way, the hard coat layer composing the topmost surface of the solar reflective mirror is reduced in the electrical resistance and this makes dust or the like less likely to adhere in an electrostatic manner onto the surface of the solar reflective mirror.

The hard coat layer which is excessively thick will have a correspondingly increased risk of crack due to stress, and will have an elevated electrical resistance corresponding to the thickness. On the other hand, the hard coat layer which is excessively thin will not keep a necessary level of hardness. The thickness is therefore preferably 0.5 µm or larger and 10 µm or smaller, more preferably 1 µm or larger and 4 µm or smaller, and furthermore preferably 1.5 µm or larger and 3 µm or smaller. The hard coat layer, having a thickness of 3 µm or smaller, is preferable since the electrical resistance is more readily reducible.

In particular, the hard coat layer in the present invention preferably has weather resistance, scratch resistance and antifouling performance. With respect to the scratch resistance, the surface of the hard coat layer preferably has a pencil hardness of H or larger and smaller than 6H, and produces 30 or less scratch lines in the steel wool test under a 500 g/cm² load. With respect to the antifouling performance, the hard coat layer having a sliding angle of 0° or larger and 30° or smaller is preferable, since it allows water droplet to readily fall, so as to ensure a good antifouling performance.

The hard coat layer may use any kind of material so long as it satisfies the necessary performances. For example, thermosetting silicone-based hard coat, and UV curable acryl-based hard coat may be used. In particular, the hard coat layer is preferably composed of polyorganosiloxane-based resin material. Polyorganosiloxane which also has a property of inorganic material is preferable in view of improving adherence with the antistatic layer when the antistatic layer contains the binder composed of an inorganic material. The polyorganosiloxane is particularly preferable if it is trifunctional or tetrafunctional. Such material will make the component of the hard coat layer more resemble to that of sand dust, so that the sand dust will be no longer readily chargeable even if rubbed on the surface of the hard coat layer, and thereby the hard coat layer may be prevented more effectively from dust adhesion on the surface thereof.

The polyorganosiloxane-based resin material used for the hard coat layer has a basic skeleton represented by the formula (2) below:

RₘSi(OR')ₙ (2)

In the formula (2) above, each of R and R' independently represents a C₁₋₁₀ alkyl group and m and n are integers satisfying the relation of m+n=4.

More specifically, the polyorganosiloxane-based resin material is exemplified by tetramethoxysilane, tetraethoxysilane, tetra-*iso*-propoxysilane, tetra-*n*-propoxysilane, tetra-*n*-butoxysilane, tetra-*sec*-butoxysilane, tetra-*tert*-butoxysilane, tetrapentaethoxysilane, tetrapenta-*iso*-propoxysilane, tetrapenta-*n*-propoxysilane, tetrapenta-*n*-butoxysilane, tetrapenta-*sec*-butoxysilane, tetrapenta-t*ert*-butoxysilane, methyltriethoxysilane, methyltripropoxysilane, methyltributoxysilane, dimethyldimethoxysilane, dimethyldiethoxysilane, dimethylethoxysilane, dimethylmethoxysilane, dimethylpropoxysilane, dimethylbutoxysilane, dimethyldimethoxysilane, dimethyldiethoxysilane, and hexyltrimethoxysilane. It is also possible to use γ-(2-aminoethyl)aminopropyltrimethoxysilane, γ-(2-aminoethyl)aminopropylmethyldimethoxysilane, β-(3,4-epoxycyclohexyl)ethyltrimethoxysilane, N-β-(N-aminobenzylaminoethyl)-γ-aminopropylmethoxysilane hydrochloride, γ-glycidoxypropyltrimethoxysilane, aminosilane, methylmethoxysilane, vinyltriacetoxysilane, γ-mercaptopropyltrimethoxysilane, γ-chloropropyltrimethoxysilane, hexamethyldisilazane, vinyl tris(β-methoxyethoxy)silane, and octadecyldimethyl[3-(trimethoxysilyl)propyl]ammonium chloride. Those having their hydrolyzable groups, such as methoxy group and ethoxy group, substituted by hydroxy groups are generally referred to as polyorganosiloxane-based hard coat.

By coating and then heating the above-described resin material on the antistatic layer, a dehydration condensation is promoted to cure and crosslink the resin material, thereby the hard coat layer is formed. Among these polyorganosiloxane-based hard coats, those having methyl group, as an organic group not eliminatable by hydrolysis, will give the highest weather resistance. Such hard coat layer will also give small sliding angle since the methyl groups will distribute over the surface of the resultant hard coat in a uniform and dense manner. Accordingly, methylpolysiloxane is preferably used for this application.

The polyorganosiloxane-based hard coat layer may be formed by coating process such as wire bar coating, spin coating and dip coating, or by dry process such as vapor deposition. The coating and film-forming are also enabled by using a continuous coater such as die coater, gravure coater or Comma coater. The hard coat layer formed by coating, not by deposition, is preferable since the layer will have no free oxygen contaminated therein, so that the antistatic performance becomes less likely to be interfered by the free oxygen, and thereby the electrical resistance may successfully be reduced upon being irradiation by sunlight or UV.

After the coating, and the solvent is dried off, the hard coat layer need be heated at 50°C or above and 150°C or below, for 30 minutes to several days, for the purpose of promoting curing and crosslinking. Considering the heat resistance of the resin base, and stability of the base when the film is made up into a roll, the heating is preferably conducted at 40°C or above and 80°C or below for 2 days or longer.

In the case where a sufficient level of adherence between the hard coat layer and an underlying constitutive layer (antistatic layer) is not ensured depending on compatibility in between, it may be wise to form a primer layer in order to ensure the adherence.

The primer layer is not specifically limited so long as it is translucent and has a lot of hydroxy groups on the surface thereof. The primer layer is preferably an inorganic layer, typically formed by silica, alumina, zirconia or the like, and more preferably formed by polysilazane. The primer layer may be formed by a vacuum film-forming process or sol-gel process. The vacuum film-forming process includes resistance heating vacuum deposition, electron beam heating vacuum deposition, ion plating, ion beam-assisted vacuum deposition, and sputtering.

The primer layer inserted between the hard coat layer and the antistatic layer is preferably a thin film, typically having a thickness of 1 µm or thinner.

The hard coat layer composing the topmost surface is preferably flexible and not causative of warping. The hard coat layer may occasionally have on the surface thereof a dense crosslinked structure, which makes the film more likely to warp or more likely to crack due to lack of flexibility, and degrades the handleability. Hence, the hard coat layer is preferably designed typically by controlling the content of inorganic substance in the hard coat layer, so as to achieve good levels of flexibility and surface smoothness.

The polyorganosiloxane-based resin material usable herein is commercially available, and is exemplified by SARCoat NP720 from DOKEN Co., Ltd., SR2441 from Dow Corning Toray Co., Ltd., and Perma-New 6000 from California Hardcoating Company.

Hard coat materials applicable to the solar reflective mirror are not limited to polyorganosiloxane but may be UV curable polyfunctional acryl-based materials.

Methods of evaluating the hard coat layer include those described below.

### (Pencil Hardness)

Pencil hardness is measured in compliance with JIS K5600 standard. The surface of the hard coat layer of the individual film mirror samples is scratched with a pencil held at an angle of 45°, under a load of 500 g. The hardness was ranked by the grading symbol of pencil under which a scratch was not produced in four times or more of trial out of five times of trial.

### (Steel Wool Test)

The steel wool test is a method of visually evaluating the surface of a sample, after the surface of the hard coat layer of the sample is reciprocatingly rubbed by a predetermined number of times with a #0000 steel wool, under a 1 kg/cm² load, with a 100 mm stroke at a speed of 30 mm/sec.

### (Contact Angle/Sliding Angle Test)

In compliance with JIS-R3257 and by using a contact angle gauge DM300 (from Kyowa Interface Science Co., Ltd.), a contact angle and a sliding angle are measured. In the contact angle test, a 3 µL droplet of water is placed on a sample of the film mirror which is horizontally placed and the contact angle on the surface of the hard coat layer of the sample after 10 seconds is measured. In the sliding angle test, a 50 µL droplet of water is placed on the surface of a sample of the film mirror placed on a horizontally stage, the sample is then gradually inclined together with the stage and the angle at which the droplet starts to slide is measured.

### (9) Adhesive Layer

The adhesive layer is not specifically limited so long as it can enhance the adherence between the gas barrier layer of the reflective film and the resin base 1a used for the back side mirror- type solar reflective mirror. For the solar reflective mirror without the gas barrier layer or the like, the adhesive layer can alternatively be a layer capable of enhancing the adherence between other layer and the resin base.

The adhesive layer is preferably 0.01 to 3 µm thick, and more preferably 0.1 to 1 µm, from the viewpoint of adherence, smoothness, and reflectance of a reflecting member.

For the adhesive layer composed of resin, the resin material (binder) is not specifically limited so long as the above-described conditions of adherence and smoothness are satisfied, and is selectable from polyester-based resin, acryl-based resin, melamine-based resin, epoxy-based resin, polyamide-based resin, vinyl chloride-based resin, and vinyl chloride-vinyl acetate copolymer-based resin, which are usable independently or in the form of mixed resin. From the viewpoint of weather resistance, it is particularly preferable to use a mixed resin of polyester-based resin and melamine-based resin and is more preferable to use a thermosetting resin further mixed with a curing agent such as isocyanate. The adhesive layer may be formed by any publicly-known method of coating such as gravure coating, reverse coating or die coating.

The adhesive layer composed of metal oxide may be formed into film by various vacuum film-forming methods for forming films of, for example, silicon oxide, aluminum oxide, silicon nitride, aluminum nitride, lanthanum oxide and lanthanum nitride. The adhesive layer may be formed by, for example, resistance heating vacuum deposition, electron beam heating vacuum deposition, ion plating, ion beam- assisted vacuum deposition, and sputtering.

### (10) Solar Reflective Mirror, and Reflector for Solar Thermal Power Generation

The overall thickness of the reflective mirrors 20, 40 is preferably 80 to 300 µm, more preferably 90 to 230 µm, and still more preferably 100 to 220 µm, from the viewpoint of preventing deflection of the mirror and of ensuring good regular reflectance and handleability.

Since the solar reflective mirror, when configured as the film mirror, is preferably manufactured by the roll-to-roll process, so that the surface roughness Ra is preferably 0.01 µm or larger from the viewpoint of preventing sticking of the film, such as blocking, in the process of manufacturing and preferably has a surface roughness Ra of 0.1 µm or smaller from the viewpoint of preventing the regular reflectance from being reduced due to scattering of light possibly occurs when the sunlight is reflected.

The reflection devices for solar heat power generation 30, 50 are, as illustrated in FIG. 2A and FIG. 2B, reflection devices formed by bonding each of the solar reflective mirrors 20, 40 to a supporting base 12, while placing a tacky layer 11 in between. The supporting base 12 is bonded to the resin base 1 side of the reflective film 10 while placing the tacky layer 11 in between.

### (11) Tacky Layer

The tacky layer for bonding the solar reflective mirror to the supporting base usable herein is arbitrarily selectable from dry laminate material, wet laminate material, tacky adhesive, heat sealing agent and hot-melt agent, without special limitation. The tacky adhesive usable herein is exemplified by polyester-based resin, urethane-based resin, polyvinyl acetate-based resin, acryl-based resin, and nitrile rubber.

Unlike the embodiments illustrated in FIG. 2A and FIG 2B, the solar reflective mirror may have a tacky layer.

Lamination is preferably implemented by a continuous roll process from the viewpoint of economy and productivity, but not specifically limited thereto.

The tacky layer preferably has a thickness of 1 to 100 µm or around in general, from the viewpoint of adhesive effect and rate of drying.

Other base to be bonded to the solar reflective mirror is arbitrarily selectable from those capable of protecting the silver reflective layer, and is exemplified by plastic films or sheets such as acryl film or sheet, polycarbonate film or sheet, polyarylate film or sheet, polyethylene naphthalate film or sheet, polyethylene terephthalate film or sheet, and fluorine-containing film; resin films or sheets kneaded therein with titanium oxide, silica, aluminum powder, copper powder or the like; and resin films or sheets obtained by coating a resin kneaded with these materials and then surface- coated typically by metal deposition. The thickness of the bonded films or sheets preferably falls in the range from 12 to 250 µm, although not specifically limited. These bases may be provided with recesses or projections before being bonded with the solar reflective mirror, or may have the recesses or projections formed thereon at the same time with the bonding.

### (12) Supporting Base

The supporting base used for the reflection device for solar heat power generation usable herein is selectable from high thermal conductivity metal materials such as steel sheet, copper sheet, aluminum sheet, aluminum-plated steel sheet, steel sheet plated with aluminum-based alloy, copper-plated steel sheet, tin-plated steel sheet, chromium-plated steel sheet and stainless steel sheet; and steel sheet combined with resin and metal sheet.

In the present invention, it is particularly preferable to use highly corrosion-resistant plated steel sheet, stainless steel sheet, aluminum sheet or the like. It is more preferable to use the steel sheet combined with resin and metal.

The thus-configured reflection device for solar heat power generation is preferably used for the purpose of condensing sunlight.

In one possible embodiment of use of the reflection device for solar heat power generation, the reflection device is shaped into a gutter (semicylinder), provided with a pipe member enclosing a fluid at the center of the semicylinder, and is designed to condense sunlight into the pipe member to thereby heat the internal fluid and the thermal energy is converted into electric power.

In another embodiment, flat panel type reflection devices are installed at a plurality of positions, sunlight reflected by the individual reflection devices are condensed into a single reflective mirror (central reflective mirror) and thermal energy obtained through reflection on the reflective mirror is converted using a power generating section. In particular for the latter case, the solar reflective film mirror of the present invention is most preferably used since the reflection device used therefor is required to have a high level of regular reflectance.

While the description above dealt with the solar reflective mirror, the combination of the hard coat layer and the antistatic layer of the present invention is also applicable to other functional films. The functional films are exemplified by heat barrier film, light shielding film, antifouling film, and protective film for touch panel. Among them, the heat barrier film preferably has an extremely thin silver layer of 1 nm or thicker and 30 nm or thinner, so that it is worth noting that all foregoing descriptions on the problems and effects regarding the solar reflective film mirror entirely apply to those of the heat barrier film.

### EXAMPLE 1

The present invention will be explained in detail below, referring to Examples and Comparative Examples without intention to limit the present invention thereto. Wordings of "part(s)" or "%" in Examples and Comparative Examples mean "part(s) by mass" or "% by mass" unless otherwise specifically noted.

Note that the solar reflective mirrors explained in Examples and Comparative Examples are those of the back side mirror-type.

### [Method of Manufacturing Reflective Film/Film Mirror]

A biaxially stretched polyester film (polyethylene terephthalate film, 25 µm thick) was used as the resin base 1. On one surface of the polyester film, a coating liquid which was prepared by mixing a polyester-based resin (Polyester SP-181, from Nippon Synthetic Chemical Industry Co., Ltd.) and a TDI (tolylene diisocyanate)-based isocyanate (2,4-tolylene diisocyanate) according to a ratio by solid resin content of 10:2, adding methyl ethyl ketone as a solvent, and further by adding glycol dimercaptoacetate (from Wako Pure Chemical Industries, Ltd.) as a corrosion inhibitor so as to adjust the content thereof to 10% by mass, was coated by gravure coating, to thereby obtain the anticorrosive layer 2 of 60 nm thick.

Next, on the anticorrosive layer 2, the silver reflective layer 3 was formed by vacuum deposition, where the thickness was adjusted to 80 nm.

Next, the anticorrosive layer 4 was formed over the silver reflective layer 3 in the same way as described above, except that Tinuvin 234 (from Ciba Japan Ltd.) was used in place of glycol dimercaptoacetate used in the above-described anticorrosive layer 2.

Next, on the anticorrosive layer 4, a UV absorbing polymer "Newcoat UVA-204W" (from Shin-Nakamura Chemical Co., Ltd.) was coated by gravure coating, where the thickness was adjusted to 5 µm, to thereby form the UV absorbing layer 5.

In this way, a base mirror having the resin base 1, the anticorrosive layer 2, the silver reflective layer 3, the anticorrosive layer 4, and the UV absorbing layer 5 stacked therein was formed. The base mirror is structured similarly to the reflective film illustrated in FIG. 1, but without the gas barrier layer.

Next, on the UV absorbing layer 5, an adhesive TBS-730 (from DIC Corporation) was coated by gravure coating, where the thickness was adjusted to 5 µm, to thereby form the adhesive layer 9, and thereon a 75 µm-thick acrylic resin sheet S001 (from Sumitomo Chemical Co., Ltd.) was bonded by the roll process, to thereby provide the resin base 1a. The film mirror which represents a basic structure in Examples and Comparative Examples was thus manufactured.

### [Preparation of Antistatic Coating Liquid]

An antistatic coating liquid was prepared by mixing, and then stirring, 14 parts of a siloxane-based Colcoat P (from Colcoat Co., Ltd.) as an inorganic binder, 85 parts of a phosphorus-doped tin oxide Celnax CX-S501M (from Nissan Chemical Industries, Ltd.) as an inorganic double oxide, and one part of BYK3550 (from BYK Japan KK) as a leveling agent.

The antistatic layer was formed using the antistatic coating liquid.

### [Comparative Example 1]

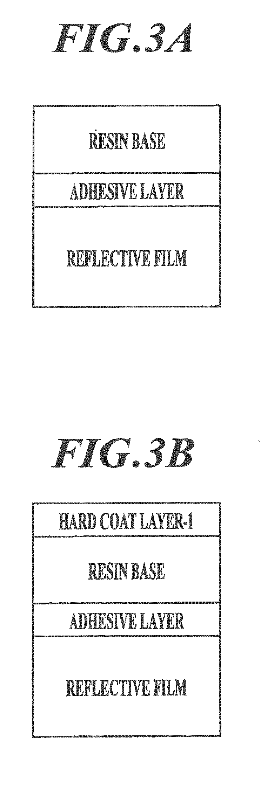

A structure of Comparative Example 1 is illustrated in FIG. 3A.

In Comparative Example 1, the film mirror having the above-described basic structure was used without modification.

### [Comparative Example 2]

FIG. 3B illustrates a structure of Comparative Example 2.

On the film mirror having the above-described structure, a hard coat liquid Perma-New 6000 (from California Hardcoating Company) composed of polyorganosiloxane was coated using a wire bar, dried at 80°C for 60 seconds, then heated at 70°C for 48 hours to thereby form a hard coat layer with a dry thickness of 3 µm. The film mirror of Comparative Example 2 was thus manufactured.

### [Example 1]

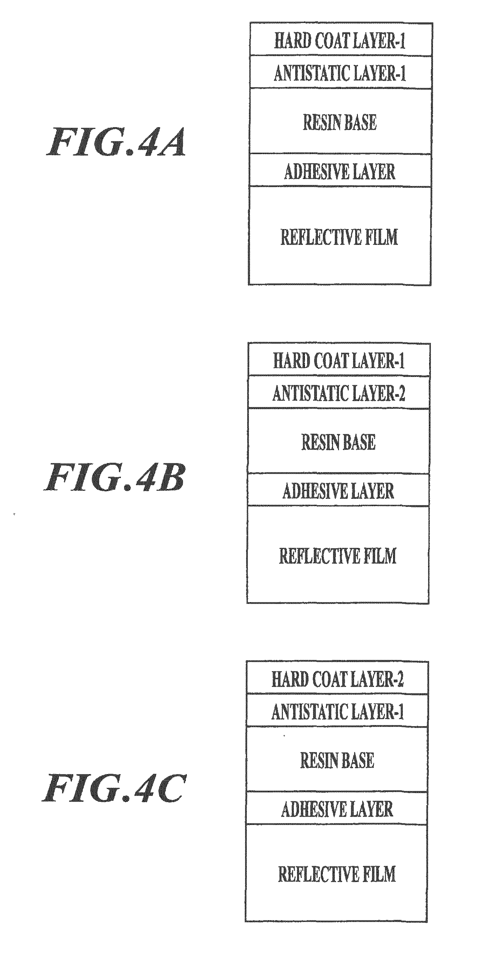

A structure of Example 1 is illustrated in FIG. 4A.

On the film mirror having the above-described basic structure, the antistatic coating liquid was coated using a wire bar, dried at 80°C for 10 seconds to thereby form an antistatic layer with a dry thickness of 300 nm. Thereafter, a hard coat liquid Perma-New 6000 (from California Hardcoating Company) composed of polyorganosiloxane was coated using a wire bar, dried at 80°C for 60 seconds, then heated at 70°C for 48 hours to thereby form a hard coat layer with a dry thickness of 3 µm. The film mirror (solar reflective mirror) of Example 1 was thus manufactured.

### [Example 2]

A structure of Example 2 is illustrated in FIG 4B.

A film mirror of Example 2 was manufactured in the same way with Example 1, except that, in place of using Coloat P, acrylic resin BR-80 (from Mitsubishi Rayon Co., Ltd.) dissolved in methylethylketone was used as the binder in an antistatic coating liquid to thereby form the antistatic layer with a dry thickness of 300 nm.

### [Example 3]

A structure of Example 3 is illustrated in FIG. 4C.

A film mirror (solar reflective mirror) of Example 3 was manufactured in the same way with Example 1, except that, in place of forming the hard coat layer in Example 1, a UV-curable acryl-based hard coat Opstar (low refractive index type, from JSR Corporation) was coated using a wire bar, dried at 80°C for 60 seconds, and allowed to cure under UV irradiation in a nitrogen atmosphere, to thereby form a hard coat layer with a dry thickness of 3 µm.

### [Example 4]

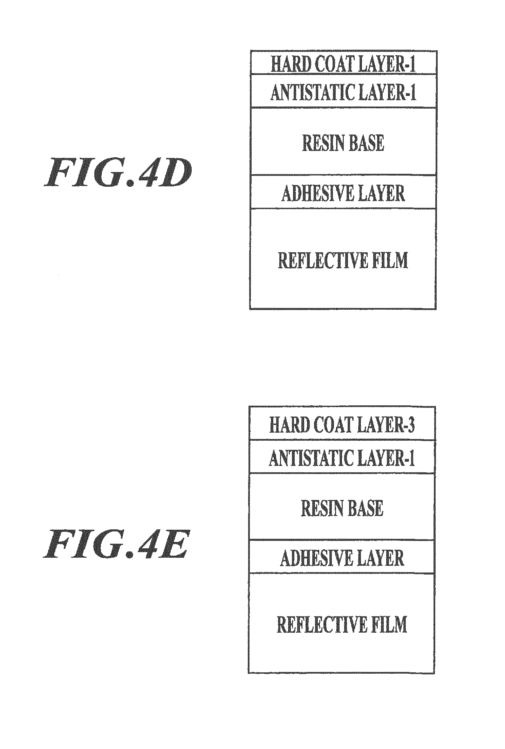

A structure of Example 4 is illustrated in FIG. 4D.

A film mirror (solar reflective mirror) of Example 4 was manufactured in the same way with Example 1 except that the dry thickness of the hard coat layer was modified to 2 µm.

### [Example 5]

A structure of Example 5 is illustrated in FIG 4E.

A film mirror (solar reflective mirror) of Example 5 was manufactured in the same way with Example 1 except that the hard coat layer was formed by adding 2.5% by weight of an UV absorber NANOBYK-3821 (from BYK Japan KK) to the hard coat liquid used in Example 1.

### [Evaluation of Film Mirror (Solar Reflective Mirror)]

The film mirrors (Comparative Examples 1 and 2, Examples 1 to 5) manufactured as described above were subjected to measurement of regular reflectance, weather resistance, steel wool test for testing scratch resistance, and measurement of sliding angle and surface electrical resistance for assessing antifouling performance, as described below, and they were evaluated with respect to the individual items.

### [Measurement of Regular Reflectance]

Regular reflectance (%) was measured using a spectrophotometer "U-4100" from Shimadzu Corporation, setting an angle of incidence of incident light to 5°, relative to the normal line on the reflective surface. Evaluation was made based on average values of reflectance measured over the range from 250 nm to 2500 nm.

### [Steel Wool Test]

Scratch resistance was tested using a both-way wear tester (HEIDON-14DR, from Shinto Scientific Co., Ltd.) attached with a steel wool (#0000) as a scratching material, and the surface of each film mirror was rubbed with the steel wool reciprocatingly 10 times at a speed of 10 mm/sec under a load of 500 g/cm². The number of scratch lines observed after the test was evaluated. Furthermore, the scratch resistance of each film mirror, which was allowed to stand under irradiation by a xenon lamp (UV irradiation) at 75°C, 85%RH for six month, was tested by the similar steel wool test and the number of scratch lines was evaluated.

### [Sliding Angle]

A contact angle gauge DM501 (from Kyowa Interface Science Co., Ltd.) was attached with a sliding angle measurement kit DM-SA01, 50 µl of water was dropped on the surface of each film mirror fixed to a stage, the stage was then inclined from the horizontal state at a speed of 0.5°/sec, and the angle at which the water droplet starts to slide was measured as the sliding angle. As for water repellent film, the smaller the sliding angle, the better since water droplets are more likely to fall and this means better antifouling performance. In the sliding angle test, also the performance after the xenon lamp irradiation similarly as described above in the steel wool test was measured.

### [Surface Electrical Resistance]

Surface electrical resistance was measured using Hiresta from Mitsubishi Chemical Corporation, in compliance with JIS K7194 standard. Each sample was allowed to stand in an environment with a humidity of 50% at 50°C for 2 hours or longer, placed on an electrically conductive metal plate, applied with a voltage of 500 V and the surface electrical resistance of the sample after 30 seconds from the start of measurement was measured using a probe. In the surface electrical resistance test, also the performance after the xenon lamp irradiation, similarly as described above in the steel wool test, was measured.

### [Outdoor Exposure Test/Observation of Amount of Sand Adhesion]

Each sample of the individual film mirrors (Comparative Examples 1 and 2, Examples 1 to 5) was bonded to an aluminum base to manufacture each reflection device for solar heat power generation, and installed in the Arizona State, USA (the region is arbitrary so long as direct sunlight is abundant) at an angle of 30° away from the ground. One week after and one year after the installation, the amount of sand adhesion on the surface of each film mirror was visually observed and ranked by ○, Δ and × according to the criteria below:
○: slight sand adhesion, but light reflection on the surface observable;
Δ: almost no light reflection observable due to sand adhesion on the surface; and
×: no observable light reflection due to sand adhesion almost over the entire surface.

### [Outdoor Exposure Test/Field Test]

In the Arizona State, USA (the region is arbitrary so long as direct sunlight is abundant), samples (reflection devices for solar heat power generation) of the film mirrors (Comparative Example 1 to 2, Example 1 to 5), which were installed at an angle of 30° away from the ground, were washed with deionized water when the surfaces thereof were largely degraded in reflectance due to dust pollution. After keeping on implementing the operation for one year, the regular reflectance was measured under conditions described above. The regular reflectance was also measured in the same way, after keeping on washing the film surfaces using a predetermined brush and water.

Results of evaluation of the individual items are shown in Table 1.

[Table 1]

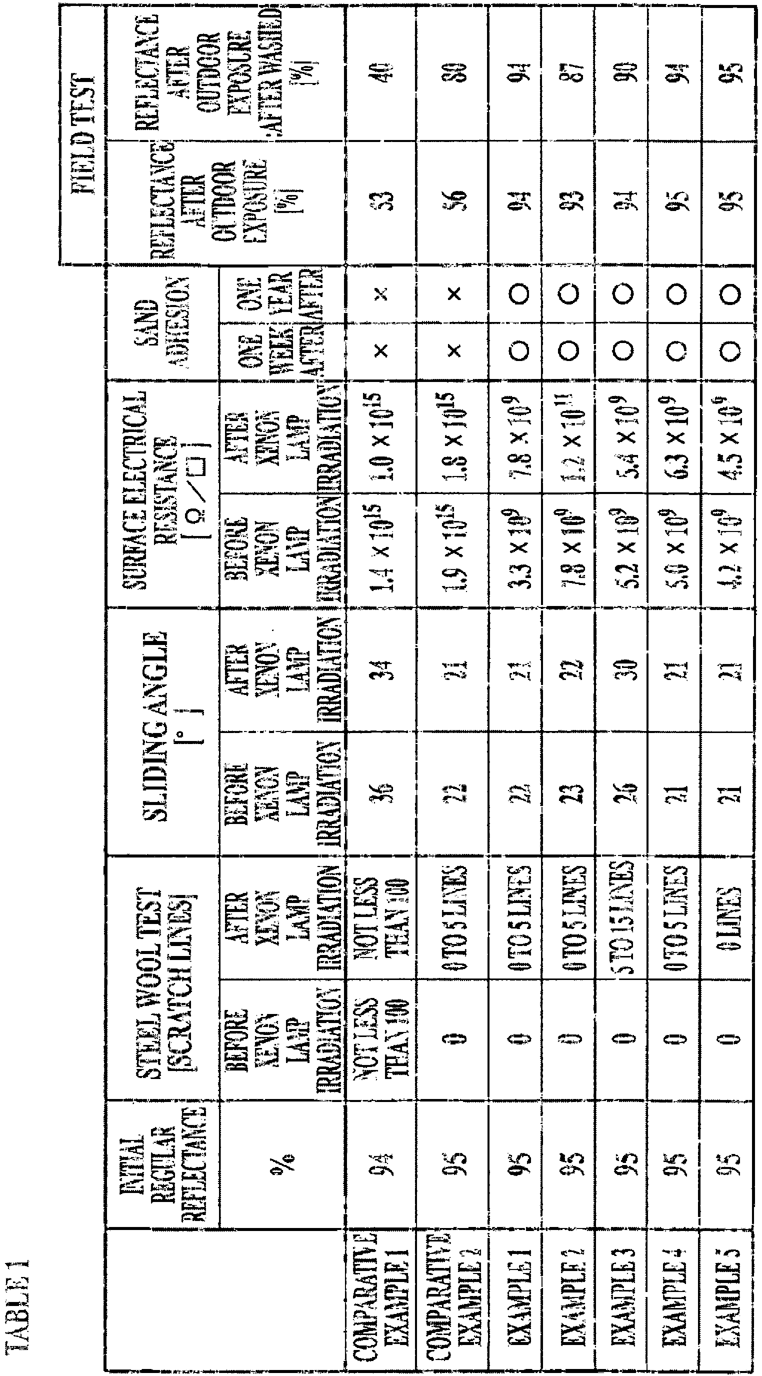

As is clear from the results of evaluation shown in Table 1, the individual characteristics of Examples 1 to 5, which specifically represent the solar reflective mirror of the present invention, were found to be superior to those of Comparative Examples 1 and 2.

The film mirror of Comparative Example 1 having neither the hard coat layer nor the antistatic layer was found to be susceptible to scratch and dirt.

The film mirror of Comparative Example 2 having the hard coat layer but no antistatic layer was found to have a high electrical resistance and was susceptible to adhesion of a lot of sand as a consequence.

In contrast, Examples 1 to 5 showed slight degradation in the antifouling performance and scratch resistance after the long-term outdoor exposure, but were found to successfully keep high levels of reflectance by virtue of the weather resistance of the hard coat layer. This is supposedly because the solar reflective mirror of the present invention is given three functions that are antifouling performance, scratch resistance and weather resistance by the hard coat layer.

In addition, the antifouling performance was further improved, supposedly because the hard coat layer composing the surface of the mirror is made less likely to catch sand or other dirt, by the contribution of the antistatic layer.

In short, it is understood that the solar reflective mirror of the present invention having the hard coat layer and the antistatic layer can provide a solar reflective mirror and a reflection device for solar heat power generation having excellent scratch resistance and antifouling performance and good weather resistance of keeping good regular reflectance of sunlight even if installed in a severe environment over a long term.

Such technology regarding the solar reflective mirror of the present invention is effective as a technology regarding film mirror which can prevent the regular reflectance from reducing due to degradation of the reflective layer, which are lightweight and flexible, and which are adaptable to areal expansion and mass production while suppressing the manufacturing cost.

### INDUSTRIAL APPLICABILITY

With the structure described above, the present invention is usable as a solar reflective mirror, a reflection device for solar heat power generation and a functional film.

### Explanation of symbols

- 1, 1a: resin base
- 2: anticorrosive layer
- 3: silver reflective layer (reflective layer)
- 4: anticorrosive layer
- 5: UV absorbing layer
- 6: gas barrier layer
- 7: antistatic layer
- 8: hard coat layer
- 9: adhesive layer
- 10: reflective film
- 11: tacky layer
- 12: supporting base
- 20, 40: solar reflective mirror
- 30, 50: reflection device for solar heat power generation

## Claims

1. A solar reflective mirror having a reflective layer provided on a resin base,
wherein the solar reflective mirror comprises a hard coat layer provided on a topmost surface on a light-incident side of the mirror, and
wherein an antistatic layer is provided between the reflective layer and the hard coat layer.

2. The solar reflective mirror of Claim 1, wherein the antistatic layer is provided adjoining the hard coat layer.

3. The solar reflective mirror of Claim 1 or 2, wherein the antistatic layer has a thickness of 100 nm or larger and 1 µm or smaller.

4. The solar reflective mirror of any one of Claims 1 to 3, wherein the antistatic layer contains an inorganic binder as a binder.

5. The solar reflective mirror of any one of Claims 1to 4, wherein the antistatic layer contains an electrically conductive fine inorganic particle.

6. The solar reflective mirror of Claim 5, wherein the electrically conductive fine inorganic particle is a fine particle of a tin oxide or a doped-type tin oxide.

7. The solar reflective mirror of Claim 6, wherein the fine particle of a doped-type tin oxide is a phosphorus-doped tin oxide.

8. The solar reflective mirror of any one of Claims 5 to 7, wherein the antistatic layer contains 75% or more and 95% or less of the electrically conductive fine inorganic particle.

9. The solar reflective mirror of any one of Claims 1to 8, wherein the hard coat layer is composed of a resin material.

10. The solar reflective mirror of any one of Claims 1 to 9, wherein the hard coat layer is composed of a polyorganosiloxane-based resin material.

11. The solar reflective mirror of any one of Claims 1 to 10, wherein the hard coat layer has a thickness of 1 µm or larger and 4 µm or smaller.

12. The solar reflective mirror of any one of Claims 1 to 11, wherein the hard coat layer has a sliding angle of larger than 0° and 30° or smaller.

13. The solar reflective mirror of any one of Claims 1 to 12, wherein at least either one of the hard coat layer and the antistatic layer contains an UV absorber.

14. The solar reflective mirror of any one of Claims 1 to 13, wherein the solar reflective mirror is a film mirror, and has a total thickness of 80 µm or larger and 300 µm or smaller.

15. The solar reflective mirror of any one of Claims 1 to 14, wherein the solar reflective mirror has a surface roughness Ra of 0.01 µm or larger and 0.1 µm or smaller.

16. A reflection device for solar heat power generation,
wherein the reflection device is formed by bonding the solar reflective mirror of any one of Claims 1 to 15 to a supporting base while placing a tacky layer between the solar reflective mirror and the supporting base.

17. A functional film having a resin base,
wherein the functional film comprises a hard coat layer provided on a topmost surface of the functional film and an antistatic layer provided between the resin base and the hard coat layer.

18. An antistatic composition for outdoor use, comprising a hard coat layer provided on a topmost surface on a light-incident side and an antistatic layer provided under the hard coat layer,
wherein the antistatic layer contains a fine particle of a tin oxide or a doped-type tin oxide.
